# EUROPEAN PATENT APPLICATION

(11) **EP 0 609 819 A1**
(43) Date of publication of application: **10.08.1994**
(21) Application number: 94101430.0
(22) Date of filing: 01.02.1994
(51) Int. Cl.: G06F 3/033, G06K 11/18

(54) **Mouse and method for concurrent cursor position and scrolling control**

(30) Priority: 05.02.1993 US 14388; 12.08.1993 US 105901
(71) Applicant: Gilligan, Federico, Gustavo, Buenos Aires (AR); Falcon, Fernando, Diego, Buenos Aires (AR)
(72) Inventor: Gilligan, Federico, Gustavo, Buenos Aires (AR); Falcon, Fernando, Diego, Buenos Aires (AR)
(74) Representative: Gudel, Diether (DE)

(57) **Abstract**

In a manual input device for controlling a cursor on a computer display (e.g., a mouse), a supplementary control device comprising a displaceable knob mounted on one side of the mouse housing is provided for concurrent scrolling and pointing. The supplementary control supplementary control device generates a supplementary control signal in response to operation of the knob, designed to be operated by the thumb of the same hand which holds the mouse. An associated method is provided for dynamically setting scrolling parameters through detection of pre-defined patterns in the cursor's trail, at the same time the mouse is operated. The scrolling direction is set in correspondence to the dominant axis present in the cursor's trail. Detecting an approximately circular movement of the cursor allows different scrolling scale settings, including scrolling in a normal direction to the screen plane (i.e., between successive data layers).

## Description

### BACKGROUND OF THE INVENTION:

The present invention relates to computer input devices in which a transducer converts translational motion of a housing into a position signal for controlling movement of a cursor or marker on a computer display system. More particularly, the present invention relates to an input device capable of generating additional control signals and an associated method to improve and speed-up its operation.

A mouse, as it has come to be known in the lexicography of the prior art, is a widespread computer input device, which has become greatly accepted among personal computer users and computer terminal users.

Peripheral input devices of this type are described for example in U.S. Patent 3,541,541 issued to Engelbart for a mechanical mouse Nov. 17, 1970 and U.S. Patent 4,866,602 issued to Hall, Sept. 12, 1989. A mechanical mouse consists essentially of a housing which can be slid by a single hand over a flat surface to generate a pair of signals in response to the relative motion of the housing over the flat surface.

These signals are produced by a transducer typically located on the bottom or belly of the housing and are transmitted to computer means via communication means (e.g., a flexible cable connected to a computer's input port). The pair of signals represent orthogonal incremental motion components of the mouse in the x and y directions over the flat surface, in a suitable scale.

Generally the mouse movement is visually fed back to the user by a graphic symbol or cursor displayed on the computer screen that copies the movement of the mouse over a working surface or pad. The application program derives user commands according to spatial relationships between the displayed information and the cursor position on the screen when a switch is activated (usually in the form a push-button or similar means) provided on the back of the mouse for generating binary (i.e., on-off) control information.

A three-dimensional mouse, which produces three different signals representing orthogonal incremental position components in the x, y and z directions for use e.g., in positioning an object in a three-dimensional isometric display on a computer display means, is described in U.S. Patent 5,132,672 issued to Clark, July 21, 1992 and also in U.S. Patent 5,095,302 issued to McLean March 10, 1992. These devices operate producing signals for positions in the x and y directions in the same manner as in the conventional two-dimensional mouse and by producing the signal for the z direction by a transducer connected with a digit operable moveable component, such as a roller-belt or pressure sensitive button.

The mouse's capability to generate position signals plus one or more binary control signals with just one hand of the user, has turned it into a most useful tool for interactive computer program control. Its flexibility when used in combination with graphic user interfaces made this instrument a very popular input device, mostly for personal computer applications.

However, we have observed that in most computer applications, the data space the user is working on is too large to be displayed at the same time in the computer's display means. This is particularly true when working in a window environment, in which the screen is divided into several separate areas, each of which display a different data space. In normal operation of a mouse, this situation arises repeatedly forcing the user to abandon his or her main task and drive the cursor to screen areas assigned for scrolling commands, using up a significant amount of his or her useful time. Hence, since the display means generally shows just a portion of its associated data space, the mouse's functionality is limited when data fields outside the displayed portion are frequently accessed.

Therefore, there is a need for an input device that can carry out this operation in a fast and efficient manner while maintaining the original mouse concept of driving a cursor over a display means.

A squeezable mouse is known that is structured to issue scrolling commands to an interactively operated program. When the squeezable mouse is squeezed, binary switches are closed sending a binary command to the computer. This is equivalent to providing a mouse with a third button on its back, for sending an additional binary command, but using a different mouse handling technique. This solution is described in U.S. Patent 5,122,785 issued to Cooper, June 16, 1992.

All known mice and methods for scrolling information displayed by a computer display means are based on positioning or moving a cursor within pre-determined areas of the display means, and issuing binary control commands, i.e., operating push-buttons or similar binary control means, while the cursor is positioned or moved within the boundaries or across the boundaries of those pre-determined areas. For example in U.S. Patent 5,122,785 referred to above, several methods for scrolling are disclosed which are based on this principle.

These solutions can not provide concurrent cursor positioning and scrolling control, because the apparatus on which they rely do not have separate control means for that purpose, requiring the allocation of the mouse's x-y cursor control means to perform pointing or scrolling operations alternatively.

Furthermore, since methods used with those devices are based on driving the cursor to pre-determined areas of the display means, they do not allow the issuing of scrolling commands from an arbitrary cursor position. This tends to increase the average x-y cursor translation distance, since scrolling commands represent a significant part of the whole set of commands issued by a user, in interactive operation of a computer. Plus, there is a significant productivity loss, because each time a scrolling operation is performed, the operator's attention is diverted because of the need to drive the cursor to pre-determined screen areas and point to specific screen objects.

Moreover, scrolling operations generally need to be performed in a gradual way, scanning the data space in incremental steps through successive approximations so as to keep track of the displayed information until the desired data field is reached. This requires an appropriate apparatus and an operating method capable of providing a tight scrolling control, to allow fast scrolling direction switching and a wide range of available scrolling velocities.

Also, with the increasing popularity of application programs and user interfaces based on three-dimensional data array concepts (e.g., three dimensional spreadsheet programs) there is a need of a mouse capable of providing an improved way to operate these programs, allowing a user to scroll not only within a plane display, but through successive three-dimensional data layers.

These requirements are not satisfied in a complete manner by any of the mouse devices known in the industry. This is because conventional mice are conceived to drive a cursor over a finite workspace bounded by the screen limits, and are equipped with devices for generating only either movement commands or binary control commands.

Thus there is a need for an improved mouse device and method with enhanced capabilities, combining pointing and scrolling functions to speed-up operation and provide greater user comfort.

### SUMMARY OF THE INVENTION:

It is an object of the present invention to extend the limits mentioned above with a new mouse and associated method for improving its functionality while maintaining the ease of use and intuitive operation which has made it so popular.

It is also an object of the present invention to provide an improved mouse designed to take advantage of available skills in contemporary users, which is held and used much in the same way as the mouse of the prior art, thus requiring no further training of the user.

It is a basic object of the present invention to provide a mouse which enables the user to drive a cursor over a display means, and at the same time, provides scrolling of the displayed information at a plurality of speeds and in any direction.

It is an additional object of the present invention to minimize time, arm motion and user effort in performing scrolling operations with a mouse in an interactive operating environment.

It is an additional object of the present invention to provide an improved mouse having the features set forth above, and which can be easily made fully compatible with state-of-the-art related means, accessories and applications.

It is still another object of the present invention to provide a mouse of the foregoing type which is not more expensive to manufacture than a conventional two-dimensional mouse.

According to the invention, the mouse having means for scrolling as well as cursor positioning includes a supplementary control means for generating a supplementary signal from which scrolling commands are derived, when the supplementary signal is input to a computer. The supplementary control means includes a displaceable element movable by a digit of the same hand that holds and moves the mouse. The displaceable element has a bounded range of displacement amounts and is moved against a restoring force of a spring means from an equilibrium position in which no signal is generated, so as to produce a signal representing the amount of displacement of the displaceable element from its equilibrium position.

In a preferred embodiment, the supplementary control means comprises a slidable knob, urged to a released or equilibrium position by a suitable restoring force provided by a spring-loaded mechanism, and mechanically engaged with a supplementary transducer for generating the supplementary control signal indicative of the knob displacement in an appropriate scale. The supplementary control signal is encoded, bundled with other mouse generated signals and transmitted to the computer using similar techniques and means as in conventional mice.

The supplementary control signal is then processed and combined with the x-y mouse signals to control scrolling through a method that comprises detection of the dominant axis present in the cursor trail and further generation of incremental scrolling commands along the selected axis, at a rate determined by the amount of knob displacement from the equilibrium position. In this way, scrolling is always performed in the direction of the last cursor movement, which reflects the user's intention right before the scrolling operation begins.

In an enhanced embodiment of the invention, the cursor trail is analyzed in search of pre-defined patterns or gestures, which are used as general user-commands to set scrolling parameters. The scrolling parameters that can be dynamically changed are the scrolling axis (i.e., the scrolling direction) and the scrolling scale (i.e., the scrolling distance associated with each incremental scrolling command issued to the computer). The pre-defined patterns used are a vertical cursor motion, a horizontal cursor motion and a circular cursor motion. The vertical and horizontal patterns are used to set the scrolling axis as in the basic method, while the circular pattern is used to change the scrolling scale within a certain number of scrolling scale options. The vertical and horizontal patterns can be combined with the circular pattern to make scrolling axis and scrolling scale setting in a single continuous mouse movement.

In this way, the associated method of the invention takes advantage of the information available in the cursor trail to allow concurrent control of scrolling and pointing, since scrolling commands can be issued from an arbitrary cursor position and at the same time the cursor position is controlled.

Moreover, in another embodiment of the present invention, a double-mode operability is provided by splitting the displacement range of the displaceable element (i.e., the knob) into two zones in which different scrolling modes are provided. One of the scrolling modes generates one single scrolling command to provide step-by-step scrolling, while the other mode generates a continuous train of scrolling commands to provide gradual scrolling at variable rates under user control.

The main advantage of the mouse and method according to the invention is that it allows a user to concurrently and accurately control scrolling of the data space the cursor is pointing at, thus extending the mouse functionality to control not only the cursor position but the whole navigation process over a certain data space.

From a productivity standpoint, since the scrolling control device is part of the mouse system and it is inherently capable of generating bursts of scrolling commands of unlimited length without any mouse movement and regardless of its current position on the screen, the average x-y sliding distance of the mouse can be significantly reduced by eliminating repetitive trips to screen areas assigned to scrolling control (e.g., scroll bars). This leads to significant time savings and hence to greater mouse productivity and user comfort.

Furthermore, the mouse according to the invention is comparatively inexpensive, since it only requires a comparatively few extra parts compared to those of the conventional prior art mouse. The associated operational method provides an additional degree of freedom to the mouse, but with no added hardware cost. This allows concurrent scrolling control in both horizontal and vertical directions and at different scrolling scales using only a single one-dimensional supplementary control means for that purpose.

### BRIEF DESCRIPTION OF THE DRAWINGS:

The objects, features and advantages of the present invention will now be illustrated in more detail by the following detailed description, reference being made to the accompanying drawing in which:
Figure 1a is a schematic horizontal cross-sectional view through an embodiment of a mouse according to the invention, showing a mechanical portion of the supplementary control means for scrolling;
Figure 1b is a transverse cross-sectional view through the mouse shown in figure 1a taken along the section line A-A' of fig. 1c;
Figure 1c is a side elevational view of the mouse shown in figure 1a;
Figure 2 is a block diagram of the mouse of figure 1a in which the conventional mouse's components are delimited by block 1 and the novel components of the invention are delimited by block 2;
Figures 3a and 3b illustrate an associated method of using the mouse according to the invention and are diagrammatic views illustrating how the mouse is operated;
Figure 4 illustrates an enhanced associated method of using the mouse according to the invention and are diagrammatic views of successive logic windows in a display means, illustrating how the mouse is operated;
Figure 5 illustrates possible dynamic scrolling commands according to the method of the invention;
Figure 6a is a detailed side view of the supplementary control means shown in figure 1a;
Figure 6b is a schematic horizontal detailed view of the supplementary control means shown in figure 1a;
Figure 7a is a detailed transverse cross-sectional view of the supplementary control means taken along the section line D-D' of fig. 6b;
Figure 7b is a detailed horizontal cross-sectional view of the supplementary control means taken along the section line C-C' of fig. 6a;
Figure 8a is a schematic diagram representing the operational method associated with the supplementary control means shown in fig 1a;
Figures 8b and 8c are x-y diagrams representing the variation of the reluctance level of the supplementary control means and the scrolling rate associated, respectively, as functions of the knob displacement;
Figure 9 is a flow diagram representing the operational method associated to a double-reluctance supplementary control means;
Figure 10 is a block diagram of a computer system using the mouse of fig. 1a according to the invention;
Figure 11 is a diagrammatic representation of a shift register data structure as the one used for realizing the method of the invention;
Figures 12a and 12b are x-y diagrams showing examples of cursor trajectories and their consecutive cursor positions, in which are also represented parameters calculated by a mouse driver to detect pre-defined patterns in the cursor trail according to the invention;
Figures 13a and 13b show a flow chart of the pre-defined pattern detection algorithms in a preferred embodiment of the method according to this invention; and
Figure 14 is an x-y diagram showing an example of cursor trajectory for a complex dynamic scrolling command and its consecutive cursor positions;

### DETAILED DESCRIPTION OF PREFERRED EMBODIMENTS

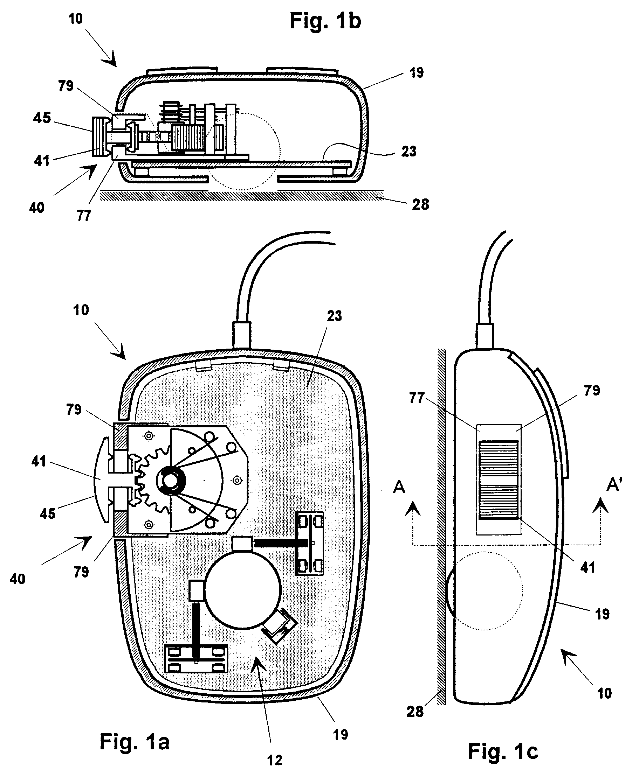

Fig. 1a, 1b and 1c show a mouse 10 according to the present invention, being this particular embodiment derived from a conventional mouse structure widely used in the industry, which is based on a rolling-sphere motion transducer 12. Mouse 10 comprises a housing 19 and a printed circuit board 23 supporting the electronic components of the mouse and the x-y transducer 12 as well. According to the invention, mouse 10 also comprises a supplementary control means 40, which in the preferred embodiment is also mounted on circuit board 23 as shown in figs. 1a and 1b.

In the preferred embodiment of the supplementary control means 40, shown in figs. 1a through 1c, the displaceable element comprises a sliding knob 41, displaceable along a linear path provided by a pair of rails 77 and 79, which are part of the structure of the supplementary control means 40. Knob 41 is shaped preferably to an approximately cylindrical surface 45, so as to alter as little as possible the contour of the mouse housing 19, while providing a safe handling and a tight control of the knob position. The details of the supplementary control means structure are explained later on herein.

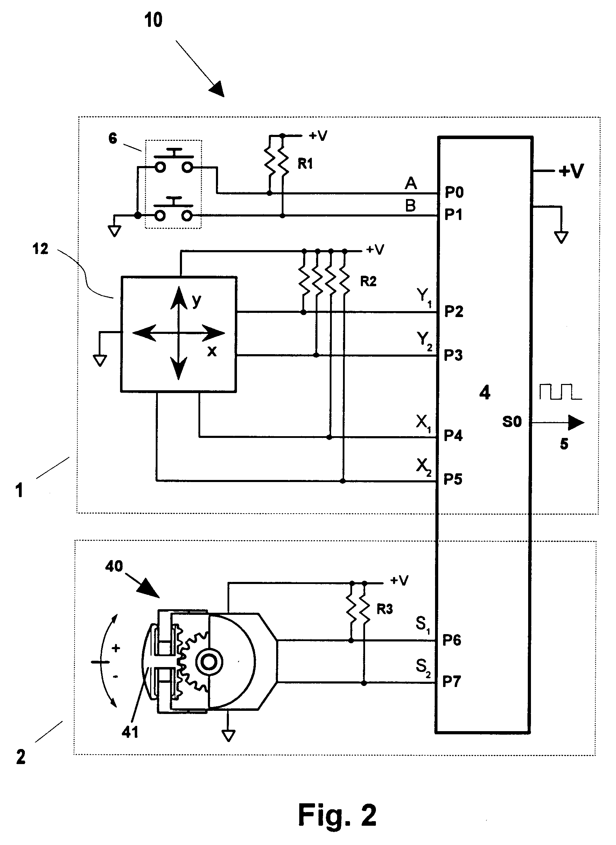

Figure 2 is a block diagram of the electronic circuit of mouse 10, according to the invention. Figure 2 shows a conventional mouse system delimited by block 1, including an x-y transducer assembly 12, responsive to movement of mouse 10 over a plane surface of a pad 28. Although a mechanical mouse is used as the basis of the preferred embodiment, it is not the only way the invention can be practiced. Transducer assembly 12 may be of a mechanical type, like the one disclosed in U.S. Patent 3,541,541 (reference made herein above), or of the electro-optical type, like the one disclosed in U.S. Patents 4,364,035 and 4,546,347 both to Kirsch. In general any device capable of tracking the mouse x-y movement is suitable as transducer 12.

In the embodiment shown in figure 2, transducer 12 generates a set of two pairs of signals X1-X2 and Y1-Y2, each one representing signed x-y incremental components of the mouse movement along orthogonal axis. Generic resistors R2 bias outputs X1, X2, Y1, Y2 from transducer 12. These outputs are synchronous quadrature pulse-signals as the ones generated by many mouse transducer devices used in the industry.

As shown in figure 2, both pairs of X and Y signals are read by parallel inputs P2 through P5 of a logic circuit means 4, which processes the signals to detect mouse motion and generates an output signal SO on an appropriate lead 5. Signal SO contains the x-y motion information which is transmitted to the computer. Figure 2 also shows two binary keys 6 biased via generic resistors R1. Keys 6 generate binary signals A and B for inputs P0 and P1 of logic circuit 4, which encodes them together with the x-y position signals, transmitting a composite signal to the computer for further processing.

Although output 5 has been represented as consisting of a single conductor, signal S0 may be conveyed in either parallel or serial format, via either conductor means 36, or otherwise wireless means such as radio link or infrared radiation.

Although, only two keys 6 are shown, mouse 10 may include more than two. The keys can be mechanical switches, but they may also be capacitive switches, conductive rubber switches or any other type of suitable binary switches.

According to the invention, mouse 10 further includes a supplementary control means 40 for scrolling control, shown in block 2 of fig. 2. In the preferred embodiment, supplementary control means 40 generates a third pair of signals S1 and S2, in the same format as the X1, X2, Y1 and Y2 signals. Signals S1 and S2 are generated in response to a displacement of knob 41 from its equilibrium position, towards any displaced position. Signal outputs S1 and S2 are respectively connected to inputs P6 and P7 of logic circuit means 4, and are processed in the same way as the group of conventional signals X1, X2, Y1, Y2.

The logic circuit means 4 can be a microcomputer configured with at least one 8-bit parallel input port and a serial output port (or a parallel output port capable of emulating a serial port), such as Motorola's MC146805 integrated circuit or the like. The x-y motion signals X1, X2, Y1, Y2, the scrolling control signals S1 and S2 and binary signals A and B are connected to P0 through P7 inputs of a parallel port of the microcomputer, to be read and processed as described above.

In the preferred embodiment, the signal issued by output 5 is in a serial format and made into data packets using a technique described by John C. Hall in U.S. Patent 4,866,602.

According to this technique, whenever there is any change of state of the mouse, the mouse logic circuit means generates a packet of three 7-bit bytes. A change of state is defined as any mouse movement or any change in the status of its binary keys. Each transmitted three-byte packet is an accumulation of all mouse activity that has occurred since transmission of the previous packet. Table I shows this prior art packet format.

**TABLE I**

| | B6 | B5 | B4 | B3 | B2 | B1 | B0 |
|---|---|---|---|---|---|---|---|
| Byte 1 | 1 | Left | Right | Y7 | Y6 | X7 | X6 |
| Byte 2 | 0 | X5 | X4 | X3 | X2 | X1 | X0 |
| Byte 3 | 0 | Y5 | Y4 | Y3 | Y2 | Y1 | Y0 |

In this prior art format, B6 is used as a synchronizing bit and is "1" for the first byte and "0" for the second and third bytes. Bits "Left" and "Right" in the first byte represent the state of the left and right binary keys 6 respectively. A "1" represents a key pressed and a "0" represents a key released. Bits X7 through X0 and Y7 through Y0 represent incremental mouse motion components in the respective x and y axis, in a two's-complement signed integer eight-bit representation.

According to the invention, the above packet structure is modified to include a fourth byte to convey the incremental position information pertaining to the supplementary control means 40. The resulting structure is shown in Table II.

**TABLE II**

| | B6 | B5 | B4 | B3 | B2 | B1 | B0 |
|---|---|---|---|---|---|---|---|
| Byte 1 | 1 | Left | Right | Y7 | Y6 | X7 | X6 |
| Byte 2 | 0 | X5 | X4 | X3 | X2 | X1 | X0 |
| Byte 3 | 0 | Y5 | Y4 | Y3 | Y2 | Y1 | Y0 |
| Byte 4 | 0 | S5 | S4 | S3 | S2 | S1 | S0 |

The synchronizing bit B6 is always "0" in the fourth byte. Bits S5 through S0 represent the distance that knob 41 has been displaced since the transmission of the previous packet, in a two's complement signed integer six-bit representation. This scheme is adequate in practice, since supplementary control means 40 tends to accumulate a much lower number of transitions than the x-y transducer 12. This scheme allows full compatibility with conventional mice already using the Hall packet format, and allows a mouse driver means to automatically detect what type of mouse is connected to the computer and process the signal accordingly. The absence of the fourth byte (i.e., a conventional mouse connected to the computer) may be interpreted as a null knob displacement by the rest of the system.

Up to this point, the basic mouse hardware has been disclosed. Following is the disclosure of the method regarding interpretation of the dynamic evolution of the x-y signals generated by mouse 10, to provide a better understanding of the relationship between the hardware and the associated method. The remaining details of the hardware implementation are disclosed later on herein.

Unlike the conventional methods mentioned herein before for issuing scrolling commands to a computer program using a mouse, which are based on driving the cursor to pre-determined screen areas and issuing binary control commands therein, the method for issuing scrolling commands using the mouse 10 of the invention is based on moving the mouse from an arbitrary cursor position in such a way as to approximately define a cursor trail pattern recognizable by a computer program, to dynamically set scrolling parameters and start a scrolling operation in accordance to the parameter settings, by displacing knob 41.

In a first basic embodiment, only one scrolling parameter is used which is the scrolling axis, and the recognizable patterns are two lines parallel to the x and y screen axis respectively. In this way, the scrolling axis is simply set according to the dominant axis component in the cursor trail.

From a user's standpoint, the resulting effect is that the knob acts as an extender of the mouse movement, since the scrolling axis is always set by the user's intention expressed in the cursor's trail dominant axis. This means that the user may drive the cursor over a window while concurrently scrolling said window on the run, using knob 41 as a continuous in-mouse scrolling control.

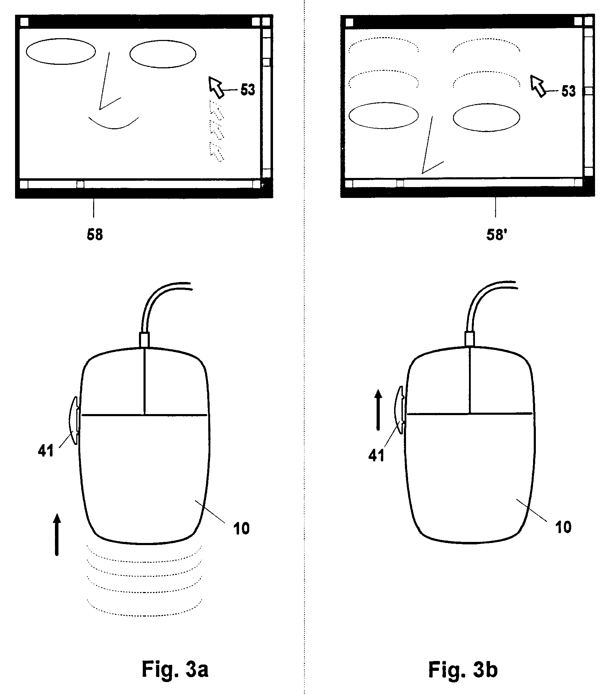

Figures 3a and 3b sketch show how scrolling operations are carried out with the mouse and method of the present invention. In figure 3a, a window 58 is displayed before the computer receives a burst of incremental scrolling commands generated by the control means 40 of the invention. In fig. 3b, window 58' is displayed after the computer program has executed the scrolling commands. According to the method, in fig. 3a the user moves the mouse 10 slightly in the direction he or she wishes to scroll the window (vertically in this case), and cursor 53 moves in response to that action. The computer program dynamically detects the dominant axis of the cursor trail (shown as dashed cursors in fig. 3a) as a result of the mouse movement, and sets the scrolling axis accordingly. In fig. 3b, the user pushes forward knob 41 to start a scrolling operation along the axis selected immediately before (in fig. 3a). The knob displacement measured from its initial equilibrium position controls the scrolling rate and direction along the selected axis (i.e., pulling knob 41 backwards scrolls the display in an opposite direction).

Hence, the action of the supplementary control means 40 of the invention complements the x-y motion of the mouse to reach the desired field, virtually extending the basic pointing function of the mouse beyond the screen or window boundaries. The x-y motion detector 12 controls movement of cursor 53 relative to window 58 (what may be defined as the physical cursor movement), while supplementary control means 40 likewise controls movement of window 58, relative to its associated data space (what hence may be defined as the logical or virtual cursor movement).

In a enhanced embodiment of the method of the invention, a step is added to increase flexibility and speed while performing scrolling operations. The added step provides detection of a separate pre-defined pattern to set the scrolling scale (i.e., the amount of scrolling performed by each incremental scrolling command issued to an application program). In a preferred embodiment, both linear patterns (i.e., horizontal and vertical cursor movements) are assigned to set the scrolling axis parameter as in the basic method, while the circular pattern is assigned to change the scrolling scale parameter within two possible values; "line-scale" and "page-scale".

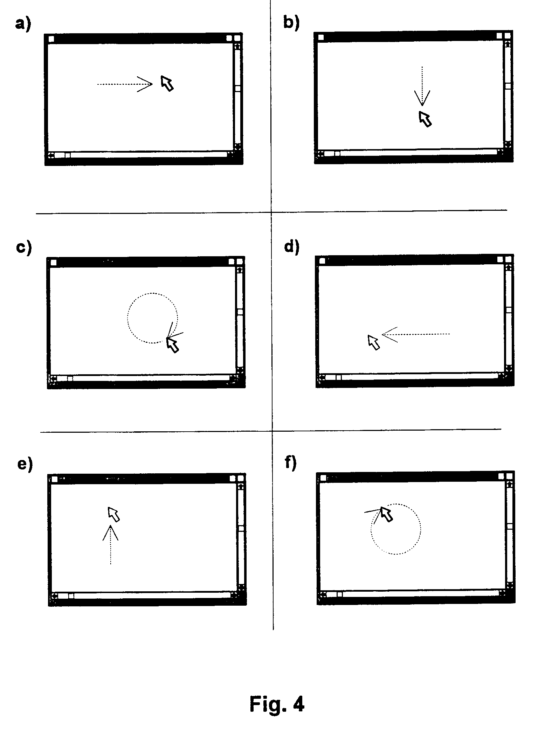

The enhanced method is sketched in figs. 4a through 4f, which represent consecutive diagrammatic views of a logic window, in a computer display operated by mouse 10. In figure 4a, an approximately horizontal motion is issued to the cursor to set the scrolling axis status variable to "x". As soon the dominant axis is detected by the computer program, the operator can start scrolling concurrently in that direction to reach the desired data field in the least time possible. In figure 4b, an approximately vertical motion is issued to the cursor to set the scrolling axis status variable to "y". In figure 4c, an approximately circular motion is issued to the cursor to change the scrolling scale status variable to "page-scale" (assuming the default scale is "line-scale"). Immediately afterwards, an approximately horizontal motion is issued to the cursor in fig. 4d, to set the scrolling axis status variable again to "x", but now the scrolling scale is "page-scale", so each incremental scrolling command generated will perform a whole page scrolling in a direction parallel to the "x" axis. In figure 4e, the scrolling axis is set again to "y", while the scrolling scale is still in "page-scale". In figure 4f, a second circular motion is issued to the cursor to change the scrolling scale status variable back to "line-scale", and the sequence may start again.

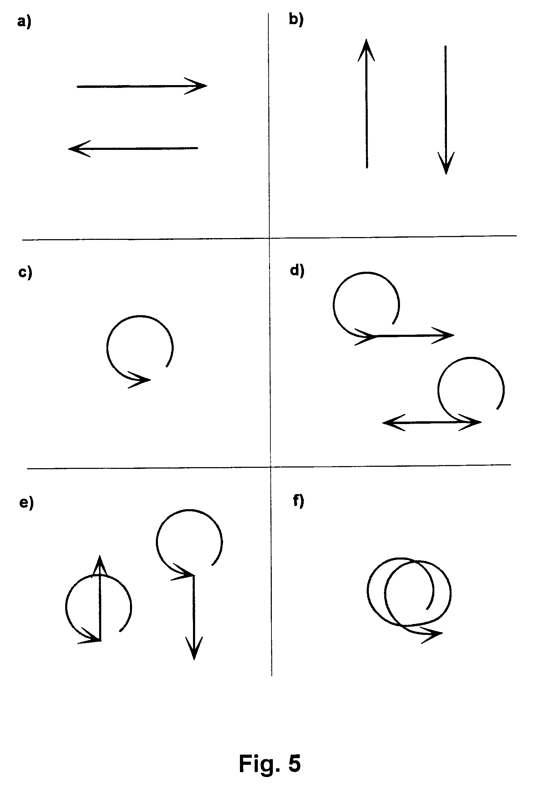

Moreover, since linear patterns and circular patterns alter independent scrolling parameters and since circular patterns are memorized once detected, they can be combined to perform more complex scrolling commands (dynamic scrolling commands), in which scrolling scale settings and scrolling axis settings are performed in a single cursor movement. This is shown in figures 5a through 5f, which are examples of dynamic scrolling commands detected on mouse movement, according to the method of the invention.

Fig. 5a sketches two isolated horizontal linear mouse motions, any of which result independently in setting the scrolling axis status variable to "x". Fig. 5b sketches two isolated vertical linear mouse motions, any of which result independently in setting the scrolling axis status variable to "y". Fig. 5c sketches an isolated circular mouse movement, which results in a change of the scrolling scale status variable. For example, if the scrolling scale status variable was set to "line-scale" before the pattern of fig. 5c is detected, after the pattern detection it will be set to "page-scale" and each incremental scrolling command triggered by operation of knob 41 will generate a whole-page scrolling of the displayed image. Fig. 5d sketches an example of a combined dynamic scrolling command, comprising a circular movement followed by a linear horizontal movement. Any of these pattern combinations are interpreted as complex commands to upgrade the scrolling scale (e.g., to "page-scale") and set the scrolling axis to "x", in a single continuous mouse movement. Fig. 5e sketches dynamic scrolling commands analogous to the ones of fig. 5d, in this case setting the scrolling axis to "y". In figure 5f, two consecutive circular patterns are chained. In a preferred embodiment of the method, this combination is used to set the scrolling scale to "layer-scale" (i.e., scrolling in or out the screen plane between successive 3D data layers).

Regarding the physical structure of the supplementary control means 40, following is a detailed description of a preferred embodiment.

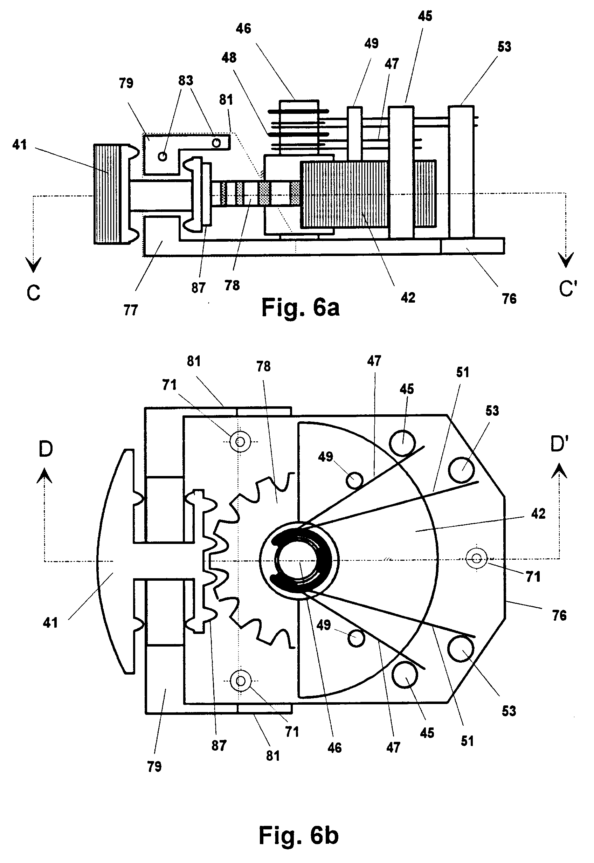

As shown in figs. 6a and 6b, the supplementary control means 40 comprises a movable part 42, of approximately semicircular shape, mounted rotatably on an pivot axle 46, which is fixed to a baseboard 76. Movable part 42 acts as a housing for a rotation transducer, as explained herein below. Movable part 42 further comprises a half toothed-wheel 78, fixed to it and engaged with knob 41 through gear 87, so that knob 41 and movable part 42 are tightly coupled. Movable part 42, and hence knob 41, are both urged to respective released or equilibrium positions by spring means 47, which consists of a resilient wire 47 wound around pivot axle 46 and held in place by a pair of stops 49, fixed to movable part 42, and by another pair of stops 45, fixed to baseboard 76. Resilient wire 47 provides a restoring force of a first reluctance level.

According to an enhanced embodiment of the invention, a second spring means 51 can be provided to produce the second reluctance level, so as to produce a steep transition between both levels giving a tactile feedback defining two operational displacement zones, as explained in detail later on herein.

Resilient wire 51 is wounded around pivot axle 46 as well, but at a higher vertical position, separated from wire 47 by ring 48 and held in place by stops 49 and a pair of additional stops 53, also fixed to baseboard 76. As movable part 42 is departed from it's equilibrium position, wire 47 reacts to provide the first (lower) reluctance level. At an angle determined by relative positions of stops 49 and stops 53 (and hence at a corresponding knob displacement), one of the stops 49 gets in contact simultaneously with both wires 47 and 51, producing the second (higher) reluctance level. Although it is not shown in the figures, stops 45 and 53 can be made of a conducting material so that each pair of stops and their associated resilient wire act as electric switches indicating when the knob 41 is in its equilibrium position, in one case, or when the knob 41 has entered the low reluctance zone, in the other case.

Rails 77 and 79 guide knob 41 through all its displacement range. Rail 77 is part of baseboard 76, and rail 79 is secured in its place by a pair of covers 81, rising from both sides of baseboard 76. Rail 79 is fixed to covers 81 through a pair of clamps 83.

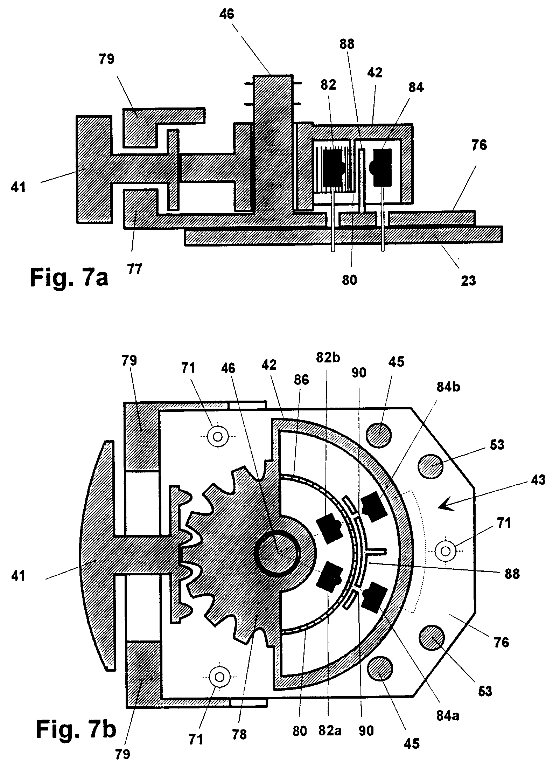

Figures 7a and 7b show detailed views of the mechanism and mounting of supplementary control means 40. The baseboard 76 is mounted directly on the printed circuit board 23 and fixed to it by three clamps 71, that provide stability to baseboard 76 and offset the force exerted by the operator's finger over knob 41. Baseboard 76 also contains the supporting axle 46, on which movable part 42 is pivotally mounted.

Movable part 42 includes an inner, concentric semi-circular slotted skirt 80. At two angularly spaced locations, opto-coupler pairs 82a-84a and 82b-84b are placed as shown in figs. 7a and 7b. Each opto-coupler pair comprises a light emitting diode (LED) (82a and 82b) and a photo-transistor (84a and 84b) mounted directly on printed circuit board 23, and connected to it advantageously by soldering. The skirt 80 has a plurality of evenly spaced slots 86, and the skirt 80 is positioned to alternately block and let through light emitted by each LED 82a and 82b to their corresponding photo-transistors 84a and 84b, as movable part 42 rotates when knob 41 is operated. Slotted skirt 80, together with opto-couplers 82a-84a and 82b-84b, configure an incremental rotation transducer. The angle between both pairs of opto-couplers is set according to the slot density adopted for skirt 80, so that their output signals have a phase difference close to 90°, as required to extract the motion direction information out of the signals.

The baseboard 76 further includes a fixed skirt portion 88, extending circumferentially only over a portion of the circumferential extent as the slotted skirt 80, and having two complementary fixed slots 90, each positioned between the photo-transistors 84a and 84b and their corresponding light emitting diodes 82a and 82b. Thus, the fixed skirt portion 88 acts as a diaphragm or mask to enhance resolution of the rotation transducer, regardless of tolerances obtained when soldering the opto-coupler components to printed circuit board 23. Utilizing suitable small opto-coupler pairs such as the Motorola's MLED71 and MRD701 and a slot width of 1 millimeter, a resolution of approximately 40 light transitions in a 45° rotation may be obtained for a skirt diameter of 2.5 centimeters, which allows a smooth enough operation.

The light transitions detected by opto-couplers 82a-84a and 82b-84b represent incremental rotation units of movable part 42, and hence incremental displacement units of knob 41. The incremental information can be converted to absolute knob displacement by accumulating successive increments, starting from a default count at the equilibrium position. This approach allows a direct digital output with minimum part count, what is highly desirable in a low cost device as a mouse, and is compatible with the resolution and precision requirements of the scrolling control function of control means 40.

The structure of the supplementary control means 40 disclosed herein provides a robust device of relatively simple assembly, that can be mounted directly on printed circuit board 23. The cylindrical geometry of the entire structure allows direct soldering of the opto-coupler components to printed circuit board 23, thus simplifying manufacturing and reducing overall cost.

Moreover, since the shape of knob 41 produces minimum alteration to the contour of the mouse housing, and since it is movable along an approximately linear path (therefore maintaining always the same position relative to the mouse housing sides), this embodiment has the advantage of being highly ergonomic, facilitating the mouse handling and allowing precise operation of knob 41 while the mouse is moved in normal operation.

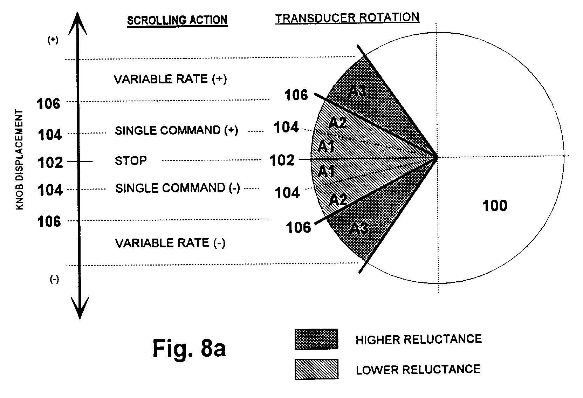

The double reluctance characteristic (if implemented) of the supplementary control means and the way it relates to the operational method is diagrammed in fig 8a, in which the rotation detected by transducer 43 is represented as an angle measured from an equilibrium position 102, spanning a portion of circle 100. The corresponding positions of knob 41 are also represented at the left side of the figure. In circle 100 several singularities are represented in the rotation range of the transducer 43, defining different zones represented as shaded areas. The corresponding singularities in the displacement range of knob 41 also represented.

As is shown in fig. 8a, the zone marked as "LOWER RELUCTANCE" surrounds symmetrically the equilibrium position 102, inserted into the "HIGHER RELUCTANCE" zones, encountered as the transducer 43 is rotated in any direction (+ or -) overpassing the reluctance boundaries 106.

As it has been explained herein before, the double reluctance characteristic allows a tactile feedback of displacement of knob 41, defining two operational modes, one for issuing single incremental scrolling commands, while the other mode is for gradual scrolling at selectable rates under the operator's control.

For this purpose, a pair of single-command displacement thresholds 104 are defined inside the low reluctance zone, symmetrically located respect of the equilibrium position 102, defining three sub-zones in each half-range called A1, A2 and A3, as shown in fig. 8a.

Thresholds 104 are trigger levels of the supplementary control signal, defined in accordance to actual dimensions and parameters of the supplementary control means 40, at approximately half the way between the equilibrium position 102 and reluctance boundaries 106. The single incremental scrolling commands are generated only when knob 41 is displaced overpassing thresholds 104, going from a lower absolute value of displacement to a higher one. In other words, a single incremental scrolling command is triggered when there is a transition from any of sub-zones A1 to the corresponding adjacent zone A2. The sign of the single incremental scrolling command is set in correspondence to the knob displacement sign.

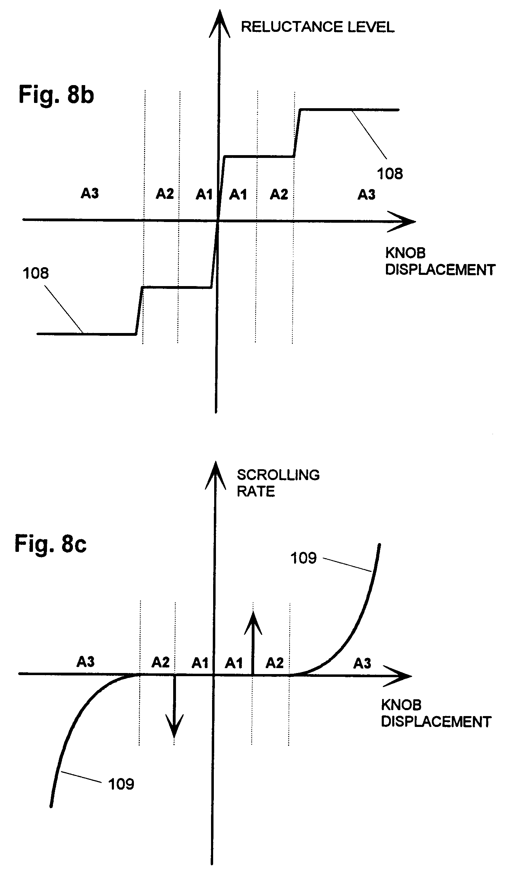

Figs. 8b and 8c are a representation of the reluctance levels and the rate of generation of incremental scrolling commands correspondingly, as functions of the signed knob displacement. In fig. 8b, the reluctance singularities produced by spring means 47 and 59 are represented in curve 108. The arrows drawn in fig. 8c between corresponding sub-zones A1 and A2 represent the single incremental scrolling commands, and curve 109 represent an example of a possible function relating the rate of generation of incremental scrolling commands vs. the knob displacement.

In this way, when an operator of mouse 10 desires to scroll a visual display in a step-by-step fashion, he or she may do it by producing repetitive excursions of knob 41 within the lower reluctance zone, in a back and forth fashion around any of the single scrolling command thresholds. The reluctance boundaries provide the necessary tactile feedback to inform the operator about the extent of the lower reluctance zone in which single-step operation is provided. When the operator desires to perform a longer gradual scroll, he or she may do it by displacing the knob 41 until it reaches any of sub-zones A3, therefore starting an automatic generation of incremental scrolling commands at a rate related to the extent the knob displacement has overpassed any of the reluctance boundaries 106.

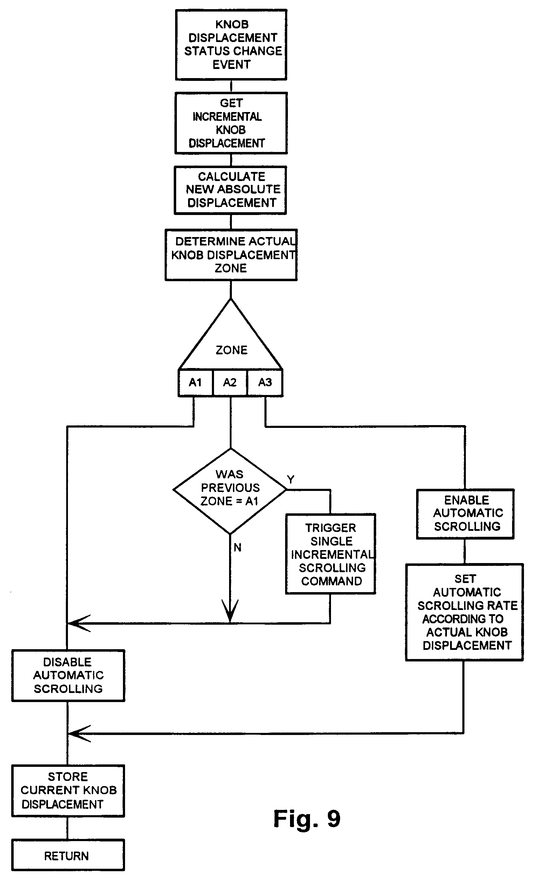

A flow diagram of a routine realizing the method disclosed above is shown in fig. 9. It will be apparent to those skilled in the art that the functions represented in the flow diagram of fig. 9 can be realized by processing means residing inside the computer or alternatively inside the mouse housing, or any other combination. However, the first case is preferred since it is likely to reduce the mouse overall cost.

The structural characteristics of the improved mouse of this invention and the way the supplementary control signals generated by supplementary control means 40 are interpreted are disclosed herein above. It will be apparent to those skilled in the art that although a conventional rolling-sphere type mouse embodiment is used to exemplify the invention, the concepts disclosed have general application in many types of x-y pointing devices used in the computer industry (e.g., a trackball having the scrolling features disclosed is basically the mouse 10 put upside-down).

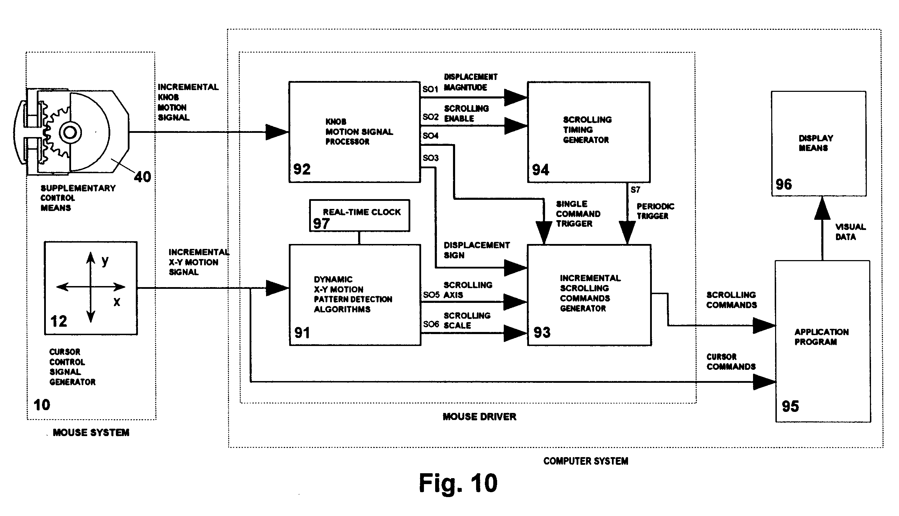

Figure 10 is a block diagram of a computer system using the mouse and method of the present invention. A special mouse driver arrangement is used to translate the signals generated by mouse 10 into scrolling commands and cursor movement commands according to the method.

In fig. 10, the signal generated by the supplementary control means 40 is transmitted to the computer and processed by processing circuit means 92, which comprises software routines for calculating the actual knob position out of the incremental motion signals generated by transducer 43. Circuit means 92 also performs the functions represented by the flow diagram of fig. 9, generating four outputs: a first output SO1, representative of the knob displacement magnitude; a second output SO2, which is a flag signal indicating when the knob has overpassed the reluctance boundaries 106 and is used as an automatic-scrolling enable signal; a third output SO3, which is a flag signal representing the sign of the knob displacement relative to its equilibrium position; plus, a fourth output SO4, which is a trigger signal generated each time the knob displacement crosses the single command threshold 104, according to what is explained herein before in relation to the operation of the supplementary control means 40.

The output SO1 is fed to a scrolling timing generator circuit means 94, which comprises hardware/software timer means for generating periodic signals to trigger the incremental scrolling commands issued to an application program 95, at a variable rate under user control. The output SO2 is also fed to circuit means 94 for enabling the generation of incremental scrolling commands, only while knob 41 is in any of the high reluctance zones A3. The output SO3 conveys the scrolling direction within the selected axis and is fed directly into an incremental scrolling command generator circuit means 93. The scrolling commands generated by circuit means 93 are transferred to the application program 95 through a suitable software path, and by similar means as the cursor control commands.

On the other hand, the conventional x-y signals generated by the mouse x-y transducer 12 are bypassed to the application program for controlling the cursor movement, as it is usually done. A copy of these signals is input to processing circuit means 91 which contains software algorithms for detecting the pre-defined patterns in the cursor trail as it moves over the display means 96. Processing circuit means 91 generates two outputs: a first output SO5, representing the value of the scrolling axis status variable; plus, a second output SO6, representing the value of the scrolling scale status variable. Both status variables are kept by processing circuit means 91 and are dynamically updated at each real-time event generated by real time clock means 97, so that they reflect the information captured in the immediate past history of the cursor movement.

The incremental scrolling commands generator 93 includes software routines that generate the corresponding commands upon receipt of the scrolling strobes generated by either scrolling timing generator circuit means 94 (for autonomous variable rate scrolling) or processing circuit means 92 (for step-by-step scrolling), as explained herein before. The particular incremental scrolling command generated by incremental commands generator 93 depends on the combined values of the scrolling axis status variable and the scrolling scale status variable generated by circuit means 91, plus the displacement sign variable generated by circuit means 92. The output generated by incremental scrolling commands generator 93 is linked to the available incremental scrolling routines of the application program to generate the corresponding visual effect on the display means 96. It will be apparent to those skilled in the art that this can be done through a variety of hardware/software techniques known in the art (e.g., a straight forward and compatible approach is through emulation of keyboard keys assigned to scrolling functions).

The output of the incremental scrolling commands generator means 93 as a result of its input is summarized in Table III.

**TABLE III**

| Input | | | Output |
|---|---|---|---|
| Scrolling Axis | Displacement Sign | Scrolling Scale | Incremental Scrolling Command |
| X | + | Line | Line Right |
| X | - | Line | Line Left |
| Y | + | Line | Line Up |
| Y | - | Line | Line Down |
| X | + | Page | Page Right |
| X | - | Page | Page Left |
| Y | + | Page | Page Up |
| Y | - | Page | Page Down |

It will be apparent to those skilled in the art that all functions performed by the elements present in the mouse driver arrangement of fig. 10 can be realized through a number of alternative embodiments comprising hardware means and/or software routines widely known in the art. The only exception are the algorithms contained in processing circuit means 91 for detecting the pre-defined patterns, which are following discussed.

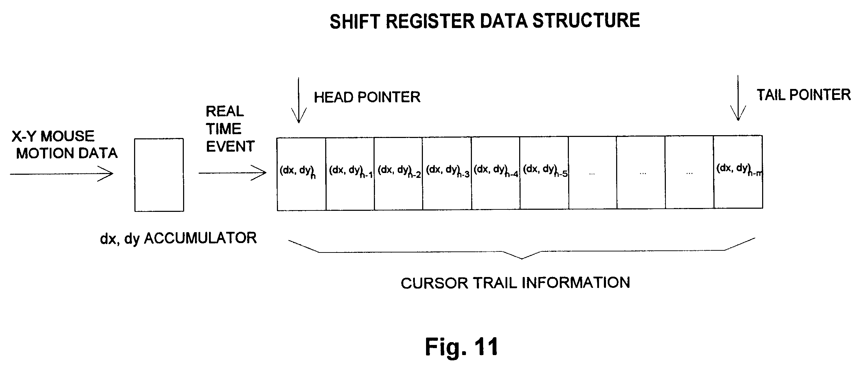

The algorithms used for detecting pre-defined patterns in the cursor trail are based on sampling consecutive cursor positions at a fixed rate, and storing the x-y information in a two-dimensional shift register data structure (represented in fig. 11), to keep track of the cursor trail as the mouse cursor is moved on the display means. For that purpose, the system must include a real-time clock means to synchronize the sampling process. Since the algorithms are based on analyzing backwards in time the relative cursor positions considering the last cursor position as the origin, only incremental translation information needs to be stored in the shift register. At each mouse input event, circuit means 91 (fig. 10) inputs the incremental x-y motion information generated by mouse 10, and adds it in an x-y accumulator provided thereto, as shown in fig. 11. At the following real-time event, the contents of the accumulator are stored in the shift register at the head pointer position, clearing then the accumulator to begin a new count. Hence, the contents of the accumulator represent the incremental x-y motion information generated by the mouse movement between two consecutive real-time events. The information stored in the shift register at the tail pointer position is then discarded, and the corresponding pointers are updated. The information stored in the shift register is then analyzed to detect pre-defined patterns to be interpreted as dynamic scrolling commands (scrolling axis settings and scrolling scale settings).

Although a real-time clock is theoretically needed to track successive cursor positions in time, it is not needed if a serial format is used in the communication link between mouse and computer, since the timing information is implicit in the data transmission rate set for the link. In this case, the incremental motion counts contained in the data packets comprising the serial format can be directly stored in the shift register data structure, obtaining the same results while requiring less computer resources. The precision of the real time period is not critical, since it is masked out by the flexibility of the pattern detection algorithms.

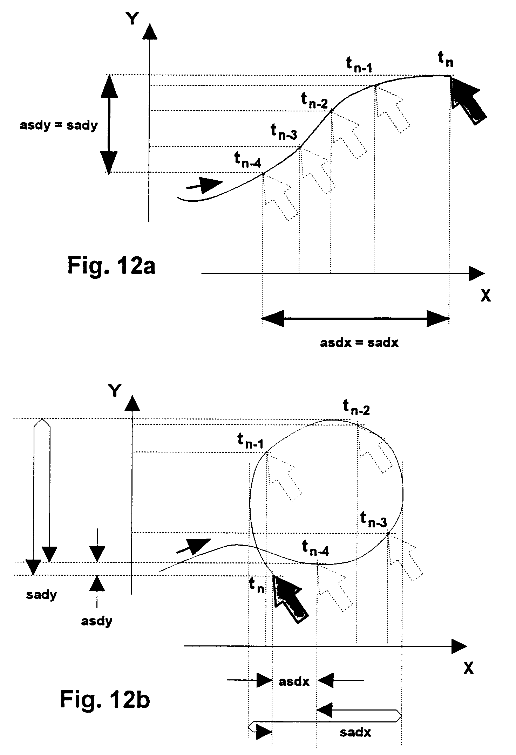

Figures 12a and 12b show two examples of possible cursor trajectories. Figure 12a shows the trail generated by an almost horizontal cursor movement while figure 12b shows the trail generated by a circular cursor movement. In these figures the position of the cursor at any given time "tₙ" is shown as a shaded arrow, and the previous cursor positions stored in the shift register are drawn in broken lines, corresponding to previous times "tₙ₋₁", "tₙ₋₂", "tₙ₋₃", ... and so on.

A number of parameters can then be calculated from the information present in the shift register at each real-time clock event, to detect the pattern "drawn" by the user with the mouse movement.

In order to detect the presence of pre-defined patterns, a group of four parameters are calculated by the algorithms. Following is a list of the parameters and their definitions:
- sadx:: sum of the absolute values of the shift register contents along the "x" axis;
- sady:: sum of the absolute values of the shift register contents along the "y" axis;
- asdx:: absolute value of the sum of the shift register contents along the "x" axis;
- asdy:: absolute value of the sum of the shift register contents along the "y" axis.

For the two linear patterns corresponding to scrolling axis settings, the algorithms are simply based on comparing the magnitudes of asdx and asdy and setting the scrolling axis according to the greater of both.

For circular pattern detection, parameters sadx and sady are compared to their corresponding asdx and asdy. As can be seen in fig. 12b, for a circular trajectory, parameters asdx and asdy tend to be much smaller than their corresponding sadx and sady. Moreover, two additional parameters are defined to cooperate in the detection of circular patterns; the pattern length and the pattern size.

The length of a pattern is defined as the number of consecutive real time events in which significant x-y mouse data has been entered in the shift register. According to the definition, a pattern length counter is obtained if the contents of a variable is incremented in each real-time event in which significant mouse movement is detected. When a real-time event takes place and no significant x-y mouse movement has been detected, the pattern length counter is reset to zero. Thus, the pattern length counter is a measure of the time used to "draw" the pattern.

On the other hand, the size of a pattern is defined as the total physical distance tripped by the cursor in either axis to draw the pattern in the display means screen. Thus, the size of a pattern can be obtained as the absolute value of the sum of all incremental distance units the cursor has been moved in either axis, in each real-time event in which the pattern length counter was incremented.

Circular patterns tend to have a greater length than linear patterns (approximately by a π factor). Furthermore, mouse operators tend to produce unintentional small mouse movements in normal operation, that might be accidentally detected as circular pattern commands. Therefore, in order to differentiate valid cursor movement commands from a number of scattered meaningless cursor movements, pattern length and size conditions are implemented in the algorithms. In this way, mouse movements with less than a pre-determined length threshold and a predetermined size threshold are filtered. Since circular patterns are useful only if they are drawn in a certain period of time and have at least a certain size, unintentional movements can be avoided by filtering small and short movements.

Taking all these considerations together, the criteria used for detecting circular patterns can be summarized in the following inequalities:
- 1:: pattern_length ≧ minimum_length
- 2:: pattern_size ≧ minimum_size
- 3:: asdx * k1 < sadx
- 4:: asdy * k1 < sady
- 5:: sadx < sady * k2
- 6:: sady < sadx * k2
Inequalities 1 and 2 filter all patterns but those which have at least an adequate size and are drawn in just one movement (i.e., without interruptions).

Inequality 3 filters all movements but those in which the final distance between the starting and ending point along the "x" axis is at least k1 times smaller than the whole distance tripped by the cursor along the same axis.

Inequality 4 is analogous to inequality 3, but for the "y" axis.

Inequality 5 filters all movements but those in which the whole distance tripped by the cursor along the "x" axis is at most k2 times greater that the overall distance tripped by the cursor along the "y" axis (quadrature condition).

Inequality 6 is the dual of inequality 5 for the "y" axis.

An approximately circular movement will satisfy all inequalities 1 through 6. If a more close detection is desired, additional conditions may be added. However, the advantage of the circle detection algorithms disclosed is that they require minimum computing power for their implementation, since only sum and subtraction operations are needed. In practice, the disclosed criteria combined with the following parameter settings have proven to be effective:

| Constant | Value |
|---|---|
| k1: | 2 |
| k2: | 2 |
| Shift Register Size: | 8 stages |
| Real-time Clock Frequency: | 18.2 ms |
| Pattern Length Threshold: | 7 real-time events |
| Pattern Size Threshold: | 10 cm |
| Minimum Meaningful Mouse Movement: | 0.5 cm |

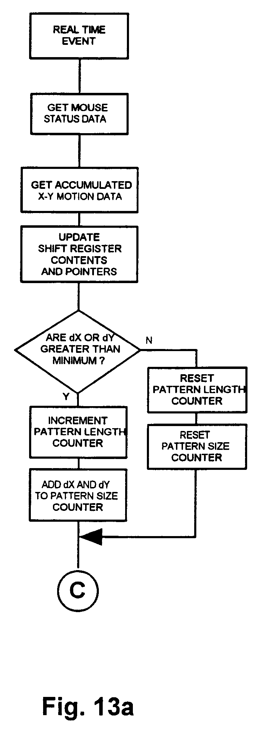

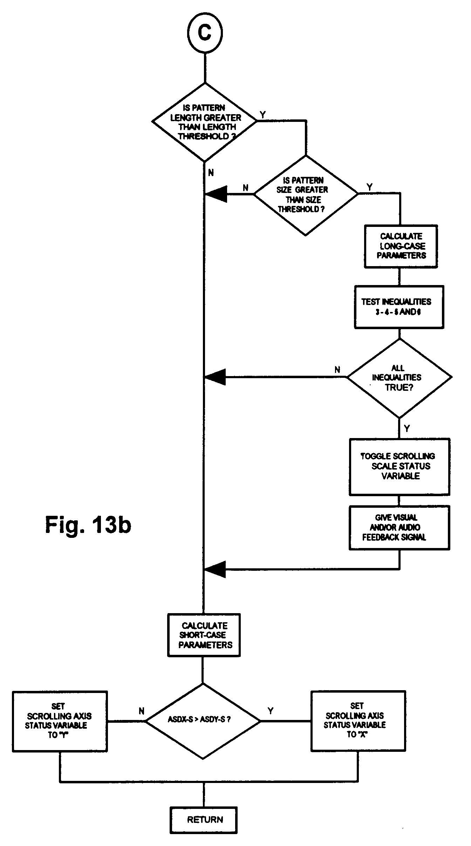

If a more sensitive operation is desired, separated shift-registers of different sizes may be used for linear and circular pattern detection. Two identical sets of parameters are then calculated; short-case parameters and long-case parameters, for linear pattern detection and circular pattern detection respectively. A single shift-register with two synchronized tail pointers defining two different shift-register extents can also be used. Since linear patterns and circular patterns affect independent status variables, the double shift-register approach is more adequate for detecting combinations of patterns as explained herein below. The flow corresponding to the pattern detection algorithms is represented in figs. 13a and 13b.

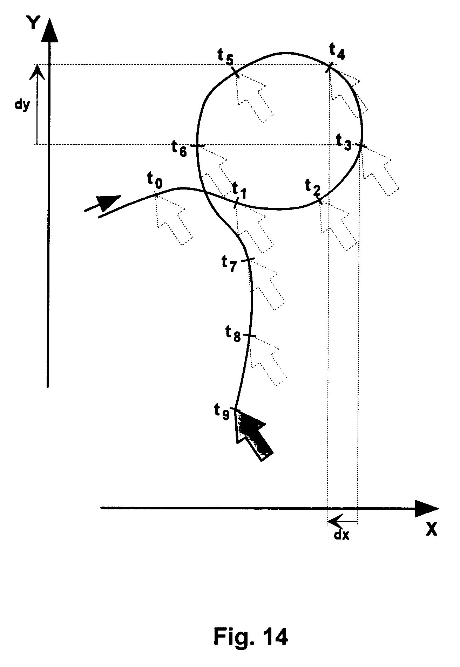

Fig. 14 shows a possible cursor trajectory to illustrate how combined mouse movements are detected. A plurality of successive cursor positions are shown at corresponding real-time events represented as marks t0 through t9.

At each real-time event the cursor trail is analyzed and a match with a circular pattern is first tried. Upon a match, the corresponding status variable (i.e., the scrolling scale status variable) is updated accordingly. At the same real-time event, the same cursor trail information is then analyzed to detect a linear pattern (i.e., horizontal or vertical movement) and the corresponding status variable is altered accordingly (i.e., the scrolling axis status variable).

Therefore, assuming for example that the scrolling scale status variable is set to "line-scale" at time t0 in fig. 14, the circular pattern is detected approximately at real-time event t6 or t7, and memorized in the scrolling scale status variable, which is advanced to "page-scale". Although the scrolling axis is set at each real-time event as has been explained, it has a useful meaning only at time t9, where it will be set to "y", according to the dominant axis of the last part of the cursor trajectory (short-case parameters). At that point, actuation of knob 41 will produce a vertical scrolling on a page basis, upwards or downwards depending on the sign of the knob displacement. In this way, although both status variables are altered independently, looking backwards from t9, the cursor trajectory shown in figure 10 looks like a complex command consisting of a circular pattern followed by a linear vertical pattern. Hence, from the operator's standpoint, this complex cursor trajectory is equivalent to a combined command to set the scrolling scale to "page-scale" and set the scrolling axis to "y", in a single continuous mouse movement. However, the pattern detection algorithms are kept simple, since they only have to discriminate a vertical line from a horizontal one, or the existence of a circular movement, one independently of the other. Therefore, a richer and more flexible language is obtained between operator and computer, but with no sacrifice in simplicity of the pattern detection algorithms.

Moreover, if scrolling in the "z" axis is used, two consecutive circular patterns are assigned to select this scrolling scale option. For this purpose, three options are available for the scrolling scale status variable which is advanced to the next option whenever a circular pattern is detected. While the scrolling scale is set to "layer-scale", the scrolling axis status variable is ignored, since it should be fixed to the "z" axis, so only the displacement sign is used to determine the scrolling heading (i.e., in or out of the screen plane). Since the pattern detection is performed at each real-time event, the shift register contents must be cleared as soon as a circular pattern is detected, to avoid double detection of the same circular pattern in consecutive real-time events.

Thus, combining the structural characteristics of the mouse 10 of the invention with the method disclosed, scrolling can be performed in different scales, along different axis and at a plurality of speeds, using only one finger of the hand that holds and moves the mouse. This allows the mouse 10 of the invention to be used as a virtual pointing device, not bounded by the physical screen limits, but still compatible with conventional mouse usage methods and applications.

The advantage of the pattern set used (i.e., a linear horizontal mouse motion, a linear vertical mouse motion and a circular mouse motion) and the pattern-to-command assignment disclosed herein, is that all patterns are easily associated to the effect they produce on the display. In other words, a linear pattern can be intuitively associated to a gesture or sign to tell the computer that a scrolling direction parallel to that of the linear pattern is desired, while a circular pattern can be intuitively associated to a gesture to tell the computer that a scrolling scale altering the whole screen or window contents is desired. Moreover, since the gesture language is composed of only three elements that can be combined, the detection of each of the individual elements can be performed with great flexibility, providing a relaxed operation and a highly humanized computer-user interface.

While the invention has been illustrated and embodied in a mouse with supplementary control means and associated method for concurrent scrolling and cursor control, it is not intended to be limited to the details shown, since various modifications and structural changes may be made without departing in any way from the spirit of the present invention.

Without further analysis, the foregoing will so fully reveal the gist of the present invention that others can, by applying current knowledge, readily adapt it for various applications without omitting features that, from the standpoint of prior art, fairly constitute essential characteristics of the generic or specific aspects of this invention.

## Claims

1. Mouse for interactive operation of a computer, said computer having display means for displaying information entities to an operator of said computer, said mouse comprising:
a first transducer means for generating x-y position signals for controlling movement of a cursor on said display means to point to said information entities in response to movement of said first transducer means by a hand of an operator, and
supplementary control means including a second transducer means for generating supplementary control signals for controlling scrolling operations for moving said information entities displayed on said display means, said second transducer means including a displaceable body and a spring-loaded mechanism connected to said displaceable body, so that said displaceable body is urged into an initial equilibrium position by said spring-loaded mechanism but is displaceable from said equilibrium position in either of two directions by a digit of said hand of said user against a reluctance provided by said spring-loaded mechanism,
said second transducer means being structured so that said supplementary control signals convey information about a displacement amount and a displacement direction of said body from said equilibrium position, so that said information entities on said display means can be moved at a variable rate determined by said displacement amount and in a direction according to said displacement direction.

2. Mouse as defined in claim 1, further comprising a housing and wherein said displaceable body comprises a knob that can be slid along a substantially linear path provided by rail means mounted at a side of said housing, so that said knob is easily operable by a thumb of said hand of said operator while said mouse is operated.

3. Mouse as defined in claim 2, wherein said second transducer means further includes a movable part rotatably mounted on a pivot axle on said housing, said movable part being mechanically engaged with said knob so that said movable part rotates when said knob is displaced from said equilibrium position in either of said two directions and said spring-loaded mechanism comprises a spring element including a resilient wire winded around said pivot axle forming a pair of V-arms and held in place by a pair of stops fixed to said movable part, said pair of V-arms abutting against stationary stops provided in said housing to urge said body through said movable part toward said initial equilibrium position.

4. Mouse as defined in claim 3, further comprising a baseboard and a printed circuit board including logic circuit means, said baseboard being affixed to said printed circuit board and said pivot axle, said stationary stops and said rail means being attached to said baseboard so as to simplify assembly and minimize tolerances.

5. Mouse as defined in claim 4, wherein said movable part is an approximately semicircular part having an internal slotted skirt coaxial to said pivot axle, and said baseboard having openings through which two opto-couplers are mounted on said printed circuit board and electrically connected thereto, each of said opto-couplers consisting of a light source and a light detector, and said baseboard also having a complementary fixed skirt portion coaxial to said pivot axle provided with two complementary fixed slots spaced from each other and positioned between said light detectors and said light sources so as to alternately block and pass light from said light sources to said light detectors, said logic circuit means generating a digital position signal indicative of rotational position of said movable part according to said displacement amount and said displacement direction.

6. Mouse for interactive operation of a computer, said computer having display means for displaying information entities to an operator of said computer, said mouse comprising: a first transducer means for generating x-y position signals for controlling movement of a cursor on said display means to point to said information entities in response to movement of said first transducer means by a hand of an operator, and supplementary control means including a second transducer means for generating supplementary control signals for controlling scrolling operations for moving said information entities displayed on said display means, said second transducer means including a displaceable body and a spring-loaded mechanism connected to said displaceable body, so that said displaceable body is urged into an initial equilibrium position by said spring-loaded mechanism but is displaceable from said equilibrium position in either of two directions by a digit of said hand of said user against a reluctance provided by said spring-loaded mechanism, said spring-loaded mechanism structured so that said reluctance varies between a first reluctance level and a second reluctance level at a displacement threshold of said displaceable body, so as to provide to said operator in said digit of said hand a tactile feedback about position of said displaceable body relative to said displacement threshold, said second transducer means being structured so that said supplementary control signals convey information about a displacement amount and a displacement direction of said body from said equilibrium position, so that said information entities on said display means can be moved at a variable rate determined by said displacement amount and in a direction according to said displacement direction.

7. Mouse as defined in claim 6, further comprising a housing and wherein said displaceable body comprises a knob that can be slid along a substantially linear path provided by rail means mounted at a side of said housing, so that said knob is easily operable by a thumb of said hand of said operator while said mouse is operated.

8. Mouse as defined in claim 7, wherein said second transducer means further includes a movable part rotatably mounted on a pivot axle on said housing, said movable part being mechanically engaged with said knob so that said movable part rotates when said knob is displaced from said equilibrium position in either of said two directions and said spring-loaded mechanism comprises a first spring element including a first resilient wire winded around said pivot axle forming a first pair of V-arms and held in place by a pair of stops fixed to said movable part, said first pair of V-arms abutting against first stationary stops provided in said housing to urge said body through said movable part toward said initial equilibrium position, and
a second spring element comprising a second resilient wire winded around said pivot axle forming a second pair of V-arms abutting against second stationary stops provided in said housing to urge said body through said movable part toward said initial equilibrium position;
wherein said first and second pairs of stops are positioned and said first and second spring elements are tensioned so that said first spring element provides said first reluctance level and said first and second spring elements provide said second reluctance level during displacement of said body beyond said displacement amount threshold.

9. Mouse as defined in claim 8, further comprising a baseboard and a printed circuit board including logic circuit means, said baseboard being affixed to said printed circuit board and said pivot axle, said first and second stationary stops and said rail means being attached to said baseboard so as to simplify assembly and minimize tolerances.

10. Mouse as defined in claim 9, wherein said movable part is an approximately semicircular part having an internal slotted skirt coaxial to said pivot axle, and said baseboard having openings through which two opto-couplers are mounted on said printed circuit board and electrically connected thereto, each of said opto-couplers consisting of a light source and a light detector, and said baseboard also having a complementary fixed skirt portion coaxial to said pivot axle provided with two complementary fixed slots spaced from each other and positioned between said light detectors and said light sources so as to alternately block and pass light from said light sources to said light detectors, said logic circuit means generating a digital position signal indicative rotational position of said movable part according to said knob displacement amount and displacement sign.

11. Mouse for cursor position and scrolling in interactive operation of a computer system operated by an operator, comprising supplementary control means producing an electronic signal connected to said computer system for scrolling control, said computer system having a display means displaying information entities on said display means during operation, said electronic signal being converted to scrolling commands in said computer means to move said information entities on said display means, said supplementary control means including a moveable body movable by a digit of a hand of said operator in either of two directions against a restoring force of spring means from an equilibrium position over a range of displacement amounts, no signal being generated when said movable body is in said equilibrium position, so that said electronic signal has a signal strength according to said displacement amount of said movable body from said equilibrium position at least over a portion of said range of said displacement amounts; and first and second x-y motion detection means providing other electronic signals input to said computer in response to relative motion of said x-y motion detector means across a plane surface in x and y directions, said x-y motion detection means being movable by the hand of the operator moving said movable body and said other electronic signals being input to said computer to move position indicating means across said display means at the same time said information entities are scrolled on said display means.

12. Mouse as defined in claim 11, further comprising a housing and wherein said displaceable body comprises a knob that can be slid along a substantially linear path at a side of said housing, so that said knob is easily operable by a thumb of said hand of said operator while said mouse is operated, said knob being mechanically engaged with a supplementary transducer for generating said supplementary control signal, said supplementary control signal being transmitted to said computer concurrently with said x-y position information.

13. Mouse as defined in claim 12, further comprising a circuit board containing a mouse electronic circuit having position signal generating means mounted thereon generating a digital position signal substantially proportional to a displacement amount of said knob from said equilibrium position.

14. Method of operating a computer in an interactive manner by a user, said computer including a display means and a mouse connected to said computer, said mouse comprising means for generating x-y incremental movement information for positioning a cursor at any of a plurality of positions displayed on said display means, binary control means for generating binary control commands for said computer, supplementary control means for generating a supplementary control signal under control of said user, and communication means for transmitting said movement information, said binary control information and said supplementary control signal to said computer; programmable circuit means in said computer for generating a display of said information entitieson said display means; said method comprising generating scrolling commands to move said information entitieson said display means from said supplementary control signal by operation of said supplementary control means by said user, said method including the steps of:
a) analyzing a trail of a movement of said cursor at periodic time intervals;
b) dynamically setting a scrolling axis status variable according to a dominant axis of said cursor trail at said time intervals;
c) scrolling said display in a scrolling direction according to the status variable determined in step
b), under control of said user by said supplementary control means.

15. Method as defined in claim 14, wherein said supplementary control signal is of variable sign and variable magnitude, and wherein said method further comprises the step of scrolling along said scrolling axis at a rate determined by said magnitude of said supplementary control signal and in a scrolling direction within said scrolling axis according to said sign.

16. Method as defined in claim 15, wherein said analyzing includes determining a position of said cursor on said display means at said periodic time intervals in terms of a coordinate system consisting of a plurality of cartesian coordinates determined by a plurality of cartesian axes.

17. Method as defined in claim 16, wherein said setting of said scrolling is such that said scrolling occurs along the one of said cartesian axes along which a cursor position difference during travel of said cursor along said trail is larger than another cursor position difference along the other cartesian axes.

18. Method of operating a computer in an interactive manner, said computer including a display means for displaying information entities to an operator and a mouse connected to said computer, said mouse comprising means for generating x-y movement information for positioning a cursor for pointing to said information entities, binary control means for generating binary control commands for said computer, supplementary control means for generating a supplementary control signal of a variable sign and a variable magnitude under control of said operator, and communication means for transmitting said movement information, said binary control information and said supplementary control signal to said computer; and programmable circuit means for generating said information entities displayed in said display means; said method comprising generating incremental scrolling commands from said supplementary control signal for moving said information entities on said display means by operation of said supplementary control means by said operator, said method including the steps of:
a) analyzing a trail of said cursor at periodic time intervals;
b) dynamically setting a first status variable to a scrolling axis option upon detection of a pre-defined cursor trail pattern of a first group of pre-defined cursor trail patterns in said cursor trail at said time intervals;
c) dynamically setting a second status variable to a scrolling scale option upon detection of a pre-defined cursor trail pattern of a second group of pre-defined cursor trail patterns in said cursor trail at said time intervals;
d) generating incremental scrolling commands form said supplementary control signal for scrolling said information entities in a scrolling direction along said scrolling axis option determined in step b) and according to said scrolling scale option determined in step c).

19. Method as defined in claim 18, wherein said first group of pre-defined patterns comprises a linear horizontal cursor motion and a linear vertical cursor motion and wherein said second group of pre-defined patterns comprises a circular cursor motion.

20. Method as defined in claim 19, wherein said scrolling direction options include an up-down option and a left-right option, and said scrolling scale options include a lower scrolling scale option and a higher scrolling scale option.

21. Method as defined in claim 20, further comprising the step of scrolling said information entities in said scrolling axis option and in said scrolling scale option at a plurality of scrolling modes depending on said magnitude of said supplementary control signal, so as to control switching between said scrolling modes just by controlling said magnitude of said supplementary control signal by operation of said supplementary control means.

22. Method as defined in claim 21, wherein said plurality of scrolling modes includes a single-step mode comprising generation of a single incremental scrolling command when said magnitude of said supplementary control signal crosses a first pre-determined magnitude threshold and only when said magnitude is growing from a lower value to a higher value.

23. Method as defined in claim 22, wherein said plurality of scrolling modes further includes a autonomous variable-rate mode comprising automatic generation of incremental scrolling commands when said magnitude of said supplementary control signal is larger that a second pre-determined magnitude threshold, said rate being related to said magnitude.

24. Method of operating a computer in an interactive manner, said computer including a display means for displaying information entities to an operator and a mouse connected to said computer, said mouse comprising means for generating x-y incremental movement information for positioning a cursor for pointing to said information entities, binary control means for generating binary control commands for said computer, supplementary control means for generating a supplementary control signal of a variable sign and a variable magnitude under control of said operator, and communication means for transmitting said movement information, said binary control information and said supplementary control signal to said computer; and
programmable circuit means for generating said information entities displayed in said display means; said method comprising generating incremental scrolling commands from said supplementary control signal for moving said information entities on said display means by operation of said supplementary control means by said operator, said method including the steps of:
a) analyzing a trail of said cursor at periodic time intervals;
b) determining similarity of said cursor trail to any of a plurality of pre-defined complex cursor trail patterns at each of said periodic time intervals;
c) dynamically setting a scrolling axis option and a scrolling scale option, according to the one of said pre-defined complex patterns for which said similarity is maximum;
d) scrolling said information entities in a scrolling direction along said scrolling axis option determined in step b) and in said scrolling scale option determined in step c).

25. Method as defined in claim 24, wherein said direction options include an up-down option, a left-right option and an in-out option, and said scrolling scale options include a lower scrolling scale option and a higher scrolling scale option.

26. Method as defined in claim 25, further comprising the step of scrolling in said scrolling direction and in said scrolling scale option at a plurality of scrolling modes depending on said magnitude of said supplementary control signal, so as to control switching between said scrolling modes just by controlling said magnitude of said supplementary control signal by operation of said supplementary control means.

27. Method as defined in claim 26, wherein said plurality of scrolling modes includes a single-step mode comprising generating a single incremental scrolling command when said magnitude of said supplementary control signal crosses a first pre-determined magnitude threshold and only when said magnitude grows from a lower value to a higher value.

28. Method as defined in claim 27, wherein said plurality of scrolling modes further includes a autonomous variable-rate mode comprising automatic generation of incremental scrolling commands when said magnitude of said supplementary control signal is larger that a second predetermined magnitude threshold, said rate being related to said magnitude.

29. Mouse driver arrangement for improving interactive operation of a computer by an operator using a mouse,
said computer including display means for displaying visual information to said operator, processing means for generating and managing said visual information, memory means for storing data and programs running in said computer, and real-time clock means for providing synchronizing signals to said programs, said mouse including means for generating x-y movement information for driving a cursor to any of a plurality of cursor positions on said display means for pointing to information entities displayed thereon, binary control means for generating binary control information, supplementary control means for generating a supplementary control signal, and communication means for transmitting said movement information, said binary control information and said supplementary control signal to said computer, said mouse driver arrangement comprising first processing means for capturing said x-y movement information and said binary control information to generate cursor control signals for positioning said cursor on said display and issuing binary control commands to said computer; said mouse driver arrangement further including:
second processing means for storing said x-y movement information as coordinates of successive cursor positions measured at each of said synchronizing signals, third processing means for analyzing said coordinates to detect first pre-defined patterns in movement of said cursor, said first pre-defined patterns being interpreted as dynamic scrolling axis commands issued by said operator, fourth processing means for analyzing said coordinates to detect second pre-defined patterns in movement of said cursor, said second pre-defined patterns being interpreted as dynamic scrolling scale commands issued by said operator, and fifth processing means for generating incremental scrolling commands for scrolling said visual information upon generation of said supplementary control signal, being said incremental scrolling commands determined by detection of said first pre-defined patterns and said second pre-defined patterns.

30. The arrangement of claim 29, wherein said supplementary control signal is of a variable sign and a variable magnitude under control of said operator and said arrangement further includes sixth processing means for processing said supplementary control signal, said sixth processing means generating a first strobe output signal activated when said magnitude crosses a first pre-defined magnitude threshold growing from a lower magnitude value to a higher magnitude value, said strobe signal triggering a single unit of said incremental scrolling commands.

31. The arrangement of claim 30, wherein said sixth processing means further generates a second output flag signal activated when said magnitude exceeds a second pre-defined magnitude threshold, said flag signal enabling autonomous generation of said incremental scrolling commands by said fifth processing means at an variable rate determined by said magnitude.
